# EUROPEAN PATENT SPECIFICATION

(11) **EP 4 450 939 B1**
(45) Date of publication and mention of the grant of the patent: **21.10.2026**
(21) Application number: 24158695.7
(22) Date of filing: 20.02.2024
(51) Int. Cl.: G01L 17/00

(54) **TIRE INTERNAL PRESSURE MEASURING APPARATUS AND TIRE INTERNAL PRESSURE MEASURING METHOD**
VORRICHTUNG ZUR MESSUNG DES INNENDRUCKS EINES REIFENS UND VERFAHREN ZUR MESSUNG DES INNENDRUCKS EINES REIFENS
APPAREIL DE MESURE DE PRESSION INTERNE DE PNEU ET PROCÉDÉ DE MESURE DE PRESSION INTERNE DE PNEU

(30) Priority: 18.04.2023 JP 2023067974
(43) Date of publication of application: 23.10.2024
(73) Proprietor: Bridgestone Corporation, Tokyo 104-8340 (JP)
(72) Inventor: TOYOFUKU, Masanobu, Tokyo, 1048340 (JP)
(74) Representative: Marks & Clerk LLP

(56) References cited:
- EP-B1- 2 861 949
- US-A- 5 445 020
- US-A1- 2017 350 781
- US-B1- 6 823 728
- US-B2- 8 833 152

## Description

### TECHNICAL FIELD

The present invention relates to a tire internal pressure measuring apparatus and a tire internal pressure measuring method.

### BACKGROUND

Technology for measuring the internal pressure of tires from outside the tires, without actually measuring the internal pressure of the tires by attaching air gauges or air pressure sensors to the tires, is known. For example, Patent Literature (PTL) 1 discloses an apparatus that detects a decrease in internal pressure by a load of a tire. PTL 2 relates to systems and methods for measurement of tire pressure. PTL 3 relates to an apparatus and method for measuring a tire pressure from the tire footprint. PTL 4 relates to a device and method for checking tire pressure. PTL 5 relates to a method for detecting and signaling the under-inflation state of a tire.

### CITATION LIST

### Patent Literature

PTL 1: JP S59202913 A
PTL 2: US 6823728 B1
PTL 3: US 8833152 B2
PTL 4: EP 2861949 B1
PTL 5: US 2017/350781 A1

### SUMMARY

However, the apparatus described in PTL 1 can only detect an abnormal decrease in internal pressure, and cannot accurately measure the internal pressure of a tire. Therefore, there is a need to further improve accuracy in measuring the internal pressure of a tire from outside the tire.

It would be helpful to provide a tire internal pressure measuring apparatus and a tire internal pressure measuring method that can improve accuracy in measuring the internal pressure of a tire from outside the tire.

A tire internal pressure measuring apparatus according to the invention includes:
a first measuring section configured to measure a tire width directional ground contact width of a tire in a state of being located on the first measuring section;
a second measuring section configured to measure a load applied from the tire in a state of being located on the second measuring section; and
a controller configured to calculate an internal pressure of the tire from the tire width directional ground contact width and the load,
wherein the controller is further configured to correct the internal pressure using stiffness information on the tire.

A tire internal pressure measuring method according to the invention is a tire internal pressure measuring method performed by a tire internal pressure measuring apparatus comprising: a first measuring section; a second measuring section; and a controller, the tire internal pressure measuring method including:
measuring, by the first measuring section, a tire width directional ground contact width of a tire in a state of being located on the first measuring section;
measuring, by the second measuring section, a load applied from the tire in a state of being located on the second measuring section;
calculating, by the controller, the internal pressure of the tire from the tire width directional ground contact width and the load; and
correcting, by the controller, the internal pressure using stiffness information on the tire.

Preferred embodiments are the subject matter of dependent claims.

According to the invention, it is possible to provide a tire internal pressure measuring apparatus and a tire internal pressure measuring method that can improve accuracy in measuring the internal pressure of a tire from outside the tire.

### BRIEF DESCRIPTION OF THE DRAWINGS

In the accompanying drawings:
FIG. 1 is a perspective view schematically illustrating a tire internal pressure measuring apparatus according to an embodiment of the present disclosure;
FIG. 2 is a top plan view of a main body of a tire internal pressure measuring apparatus according to an embodiment of the present disclosure, viewed from above;
FIG. 3 is a block diagram illustrating the configuration of a tire internal pressure measuring apparatus according to an embodiment of the present disclosure;
FIG. 4 is a cross-sectional view in a tire passing direction that illustrates a tire passing over a tire internal pressure measuring apparatus according to an embodiment of the present disclosure;
FIG. 5 is a flowchart illustrating operations of a tire internal pressure measuring apparatus according to an embodiment of the present disclosure;
FIG. 6 is a diagram illustrating variation of an output value of a second measuring section according to an embodiment of the present disclosure;
FIG. 7 is a diagram illustrating measured values (without correction) of the internal pressure of tires by a tire internal pressure measuring apparatus according to an embodiment of the present disclosure; and
FIG. 8 is a diagram illustrating measured values (with correction) of the internal pressure of tires by a tire internal pressure measuring apparatus according to an embodiment of the present disclosure.

### DETAILED DESCRIPTION

A tire internal pressure measuring apparatus according to an embodiment of the present invention will be described below with reference to the drawings. In the drawings, the same reference signs denote identical members or components. It should be noted, however, that the drawings are schematic, and the proportion or the like of each dimension may differ from that in reality.

In the present disclosure, "tire width direction" refers to a direction parallel to the rotational axis of a tire. Also, "tire radial direction" refers to a direction orthogonal to the rotational axis of the tire, and "tire circumferential direction" refers to a direction in which the tire rotates around the rotational axis of the tire.

In the present disclosure, "installation position" refers to a position on the ground, a road surface, or the like in which a main body of the tire internal pressure measuring apparatus is installed. In a state in which the main body of the tire internal pressure measuring apparatus is installed in an installation position, "tire passing direction" refers to a direction in which a tire passes over the main body of the tire internal pressure measuring apparatus. The tire passing direction is also referred to as "apparatus vertical direction." Also, "apparatus width direction" refers to a direction orthogonal to the apparatus vertical direction (tire passing direction) on a surface of the main body of the tire internal pressure measuring apparatus.

In the present disclosure, "ground contact surface" of a tire refers to a portion of an outer surface of the tire that is in contact with a road surface, the ground, or the like. Also, "tire width directional ground contact width" of the tire refers to the maximum length of a ground contact surface of the tire in a tire width direction, and "tire circumferential directional ground contact length" of the tire refers to the maximum length of the ground contact surface of the tire in a tire circumferential direction. In the following description, a tire width directional ground contact width and a tire circumferential directional ground contact length of a tire are also referred to simply as "ground contact width" and "ground contact length" of the tire, respectively. A ground contact surface, a ground contact width, and a ground contact length of a tire vary depending on the internal pressure of the tire, the weight of a vehicle on which the tire is mounted, and other factors.

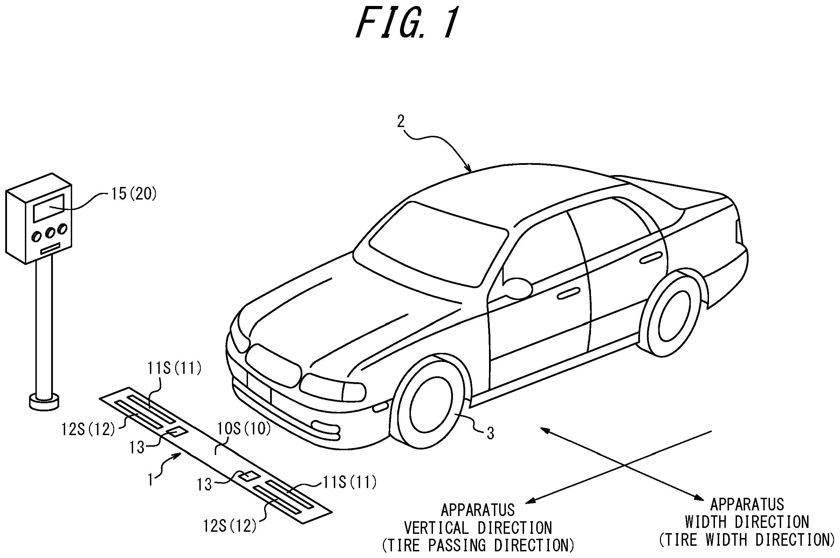

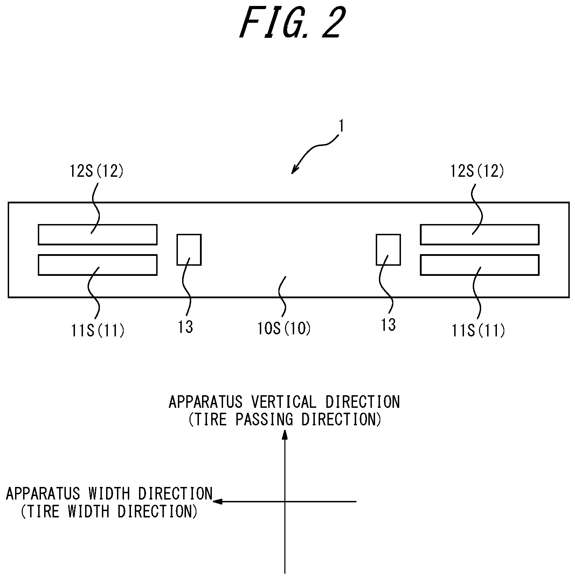

First, an overview of a tire internal pressure measuring apparatus 1 according to this embodiment will be described with reference to FIGS. 1 and 2. FIG. 1 is a perspective view that schematically illustrates the tire internal pressure measuring apparatus 1. FIG. 2 is a top plan view of a main body of the tire internal pressure measuring apparatus 1, viewed from above. The tire internal pressure measuring apparatus 1 is used to measure the internal pressure of tires 3 mounted on a vehicle 2.

The vehicle 2 is driven by the tires 3. The vehicle 2 is, for example, an automobile such as a passenger car, truck, or bus. However, the vehicle 2 is not limited to the automobile, but can be any vehicle that can be equipped with the tires 3 and can be driven by the tires 3, such as a motorcycle, a bicycle, a wheelchair, or an airplane.

The tires 3 are, for example, pneumatic tires. In such a case, the tires 3 are assembled on wheel rims and filled with air to a predetermined internal pressure. However, the tires 3 may be filled with any fluid including a gas such as nitrogen, a liquid, a gel substance, or the like to a predetermined internal pressure.

In this embodiment, the tires 3 are assumed as tires in which an electronic tag is installed. The electronic tag is, for example, a radio frequency (RF) tag. The RF tag is also referred to as a radio frequency Identification (RFID) tag. The electronic tag may be a passive electronic tag or an active electronic tag. The electronic tag may be installed in any position of the tire 3. For example, the electronic tag may be embedded in rubber that makes up the tire 3. However, no electronic tag may be installed in the tire 3.

First, an overview of this embodiment will be described with reference to FIG. 1, and the details will be described later. As illustrated in FIG. 1, the tire internal pressure measuring apparatus 1 is installed in any installation position, such as on the ground or a road surface of a road, a parking space, or a gas station, for example. As illustrated in FIG. 1, the tire internal pressure measuring apparatus 1 includes a main body 10 and a computer terminal 20. In the illustrated example, the main body 10 of the tire internal pressure measuring apparatus 1 is embedded in an installation position in such a manner as to expose a surface 10S of the main body 10, and the computer terminal 20 is installed in the vicinity of the main body 10.

The tire internal pressure measuring apparatus 1 includes first measuring sections 11 and second measuring sections 12 disposed in the main body 10. For example, when the vehicle 2 equipped with the tires 3 travels over the tire internal pressure measuring apparatus 1 in a tire passing direction, the first measuring sections 11 measure tire width directional ground contact widths of the respective tires 3 in a state of being located on the first measuring sections 11. The second measuring sections 12 measure loads applied from the respective tires 3 in a state of being located on the second measuring sections 12. The tire internal pressure measuring apparatus 1 then calculates the internal pressure of each tire 3 from the measured ground contact width and the measured load of each tire 3. For example, the tire internal pressure measuring apparatus 1 may display the calculated internal pressure of each tire 3 on a display of the computer terminal 20.

Thus, according to the tire internal pressure measuring apparatus 1 of this embodiment, the internal pressure of the tires 3 can be accurately measured from outside the tires 3, without attaching an air gauge or an air pressure sensor to the tires 3.

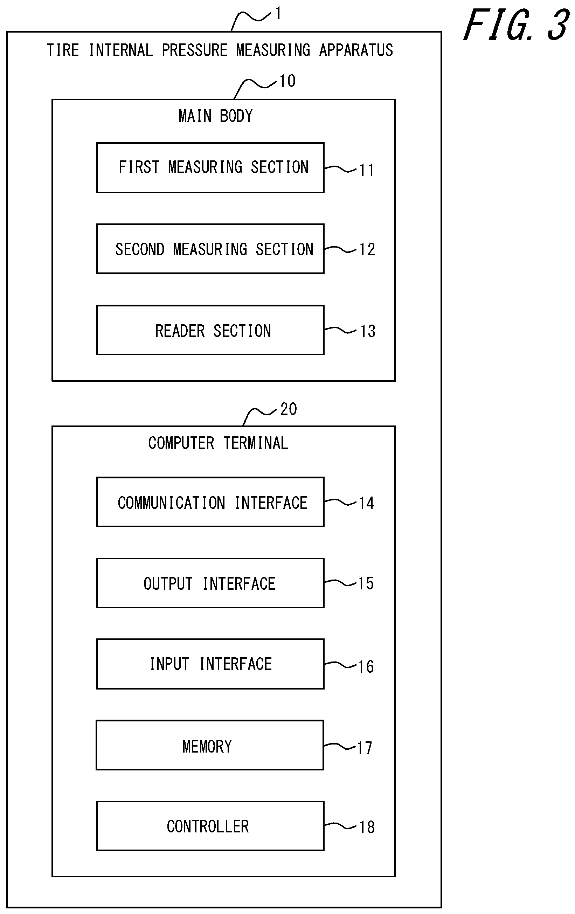

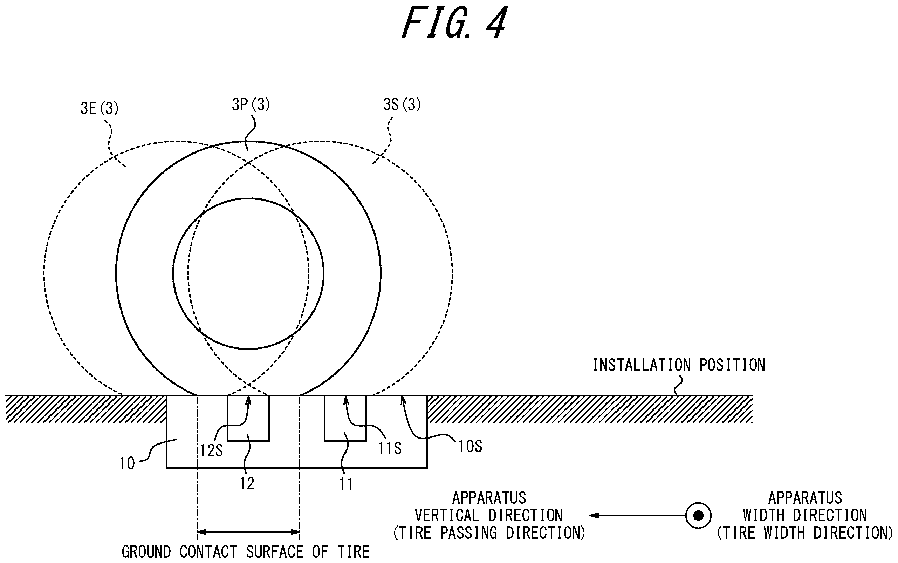

Next, the configuration of the tire internal pressure measuring apparatus 1 will be described in detail with reference to FIGS. 2, 3, and 4. FIG. 2 is a top plan view of the main body 10 of the tire internal pressure measuring apparatus 1, viewed from above. FIG. 3 is a block diagram illustrating the configuration of the tire internal pressure measuring apparatus 1. FIG. 4 is a cross-sectional view in the tire passing direction that illustrates a tire 3 passing over the tire internal pressure measuring apparatus 1.

As illustrated in FIG. 3, the tire internal pressure measuring apparatus 1 includes at least one first measuring section 11, at least one second measuring section 12, and at least one reading section 13 that are disposed in the main body 10. The tire internal pressure measuring apparatus 1 further includes a communication interface 14, an output interface 15, an input interface 16, a memory 17, and a controller 18 that are disposed in the computer terminal 20. In the tire internal pressure measuring apparatus 1, the first measuring section 11, the second measuring section 12, the reading section 13, the communication interface 14, the output interface 15, the input interface 16, the memory 17, and the controller 18 are communicably connected to each other with wires or wirelessly.

The first measuring section 11 is a sensor that measures a tire width directional ground contact width of a tire 3 in a state of being located on the first measuring section 11. The first measuring section 11 is, for example, a capacitance sensor, a contact sensor, a pressure sensor, or an infrared sensor, but is not limited to these. The first measuring section 11 has a measurement surface 11S. As illustrated in FIG. 2, the first measuring section 11 is provided in the main body 10 in such a manner as to expose the measurement surface 11S from the surface 10S of the main body 10. In this embodiment, when the tire 3 travels over the first measuring section 11 in the tire passing direction, the first measuring section 11 measures the ground contact width of the tire 3 with the tire 3 in contact with the measurement surface 11S.

The length of the measurement surface 11S in an apparatus width direction is set wider than a tire width directional ground contact width of a tire 3 to be measured. In FIG. 2, the measurement surface 11S of the first measuring section 11 is approximately rectangular in shape, but is not limited to this.

The second measuring section 12 is a sensor that measures a load applied from a tire 3 in a state of being located on the second measuring section 12. For example, the second measuring section 12 is a weight sensor, but is not limited to this. The second measuring section 12 has a measurement surface 12S. As illustrated in FIG. 2, the second measuring section 12 is provided in the main body 10 in such a manner as to expose the measurement surface 12S from the surface 10S of the main body 10. In this embodiment, when the tire 3 travels over the second measuring section 12 in the tire passing direction, the second measuring section 12 measures the load from the tire 3 with the tire 3 in contact with the measurement surface 12S.

As illustrated in FIG. 4, the second measuring section 12 is preferably disposed in the main body 10 in such a manner that the measurement surface 12S of the second measuring section 12 and the surface 10S of the main body 10 are flat. In this embodiment, the height difference between the measurement surface 12S and the surface 10S in a direction perpendicular to the measurement surface 12S is, for example, within a few mm, preferably within 1 mm, and more preferably 0 mm. Accordingly, when the main body 10 of the tire internal pressure measuring apparatus 1 is installed in the installation position, the measurement surface 12S of the second measuring section 12 and the surface 10S of the main body 10 are coplanar. Therefore, as illustrated in FIG. 4 as a tire position 3P, in the tire passing direction, when the measurement surface 12S of the second measuring section 12 is completely covered by a ground contact surface of the tire 3, the load of the tire 3 is equally applied to the measurement surface 12S of the second measuring section 12 and the surface 10S of the main body 10 via the ground contact surface of the tire 3. This reduces variations in a measured value of the load of the tire 3 by the second measuring section 12, which in turn further improves accuracy in calculating the internal pressure of the tire 3 by the tire internal pressure measuring apparatus 1. In this embodiment, the first measuring section 11, as well as the second measuring section 12, is disposed in the main body 10 in such a manner that the measurement surface 11S of the first measuring section 11 and the surface 10S of the main body 10 are flat.

With reference again to FIG. 2, the measurement surface 12S of the second measuring section 12 is approximately rectangular in shape, as with the measurement surface 11S of the first measuring section 11. The length of the measurement surface 12S in the apparatus width direction is set wider than a tire width directional ground contact width of a tire 3 to be measured. The length of the measurement surface 12S in the tire passing direction (apparatus vertical direction) is set shorter than a tire circumferential directional ground contact length of a tire 3 to be measured. As illustrated in FIG. 4, this allows the second measuring section 12 to measure the load applied from the tire 3 in a state of being located on the second measuring section 12 when, in the tire passing direction, the measurement surface 12S of the second measuring section 12 is completely covered by the ground contact surface of the tire 3. The length of the measurement surface 12S of the second measuring section 12 in the tire passing direction is, for example, 20 mm to 100 mm. By setting the length to 20 mm or more, the second measuring section 12 is less susceptible to the uneven shapes of grooves or blocks provided in treads of the tire 3. Also, by setting the length to 100 mm or less, the second measuring section 12 can support tires with short tire circumferential directional ground contact lengths. This improves the usefulness of the tire internal pressure measuring apparatus 1. More preferably, the length of the measurement surface 12S of the second measuring section 12 in the tire passing direction is approximately 40 mm.

In this embodiment, the first measuring section 11 and the second measuring section 12 are arranged at least partially side by side in the tire passing direction in the main body 10 of the tire internal pressure measuring apparatus 1. This makes it easier for a driver of the vehicle 2 to drive the vehicle 2 and pass the tire 3 continuously over the first measuring section 11 and the second measuring section 12. However, the first measuring section 11 and the second measuring section 12 need not be arranged side by side in the tire passing direction in the main body 10 of the tire internal pressure measuring apparatus 1.

The reading section 13 is a reader that reads information stored in an electronic tag installed in a tire 3. The information stored in the electronic tag installed in the tire 3 includes, for example, stiffness information on that tire 3. The stiffness information on the tire 3 is used to correct the internal pressure of the tire 3, as described in detail below. The stiffness information on the tire 3 includes, for example, any information regarding the tire 3, such as the serial number, tire size, material, number of retreads, date of manufacture, and the like of the tire 3.

As illustrated in FIG. 2, in this embodiment, the tire internal pressure measuring apparatus 1 includes two sets of the first measuring section 11, the second measuring section 12, and the reading section 13. The two sets are arranged in the main body 10 side by side in the apparatus width direction. Thereby, when the vehicle 2 equipped with the tires 3 passes over the tire internal pressure measuring apparatus 1 in the apparatus vertical direction, both of ground contact widths and loads of tires 3 on both left and right wheels of the vehicle 2 can be measured at the same time. However, the tire internal pressure measuring apparatus 1 may include any number of sets of the first measuring section 11, the second measuring section 12, and the reading section 13.

In this embodiment, in the main body 10, the reading section 13 is provided alongside at least one of the first measuring section 11 or the second measuring section 12 in the apparatus width direction. In the illustrated example, the reading section 13 is provided in the main body 10 on the inside of the first measuring section 11 and the second measuring section 12 in the apparatus width direction. This allows the reading section 13 to read an electronic tag of a tire 3 when the tire 3 passes over the first measuring section 11 or the second measuring section 12. However, the reading section 13 may be provided at any position of the main body 10.

With reference to FIG. 3, the communication interface 14 includes a communication module for connecting to a network such as the Internet, a mobile communication network, or a local area network (LAN). The communication module is, for example, a communication module compatible with mobile communication standards such as 4th generation (4G) or 5th generation (5G). The communication module may be, for example, a communication module compatible with standards for wired LAN, wireless LAN, or the like. The communication module may support short-range wireless communication standards such as Wi-Fi^{®} (Wi-Fi is a registered trademark in Japan, other countries, or both), Bluetooth^{®} (Bluetooth is a registered trademark in Japan, other countries, or both), or infrared communication.

The output interface 15 includes at least one output device. The output device is, for example, a display, a speaker, a lamp, or the like. The output interface 15 thereby outputs images, sound, light, or the like.

The input interface 16 includes at least one input device. The input device is, for example, a touch panel, a camera, a microphone, or the like. The input interface 16 accepts input operations by a user of the tire internal pressure measuring apparatus 1, such as, for example, the driver of the vehicle 2.

The memory 17 is, for example, a semiconductor memory, a magnetic memory, an optical memory, or the like. The memory 17 functions, for example, as main memory, auxiliary memory, or cache memory. The memory 17 stores any information used in operations of the tire internal pressure measuring apparatus 1. For example, the memory 17 stores a system program, an application program, embedded software, a database, or the like. The information stored in the memory 17 may be updateable with information acquired from another computer or the like via the communication interface 14, for example.

The controller 18 includes at least one processor. The processor may be, for example, a general purpose processor such as a central processing unit (CPU), a dedicated processor specialized for specific processing, or the like. The controller 18 is not limited to the processor, but may include at least one dedicated circuit. The dedicated circuit may be, for example, a Field-Programmable Gate Array (FPGA) or an Application Specific Integrated Circuit (ASIC). The controller 18 controls the respective components, i.e., the first measuring section 11, the second measuring section 12, the reading section 13, the communication interface 14, the output interface 15, the input interface 16, the memory 17, and the like described above, to realize the functions of the tire internal pressure measuring apparatus 1, including the functions of the components.

As illustrated in FIG. 3, in this embodiment, the communication interface 14, the output interface 15, the input interface 16, the memory 17, and the controller 18 are provided in the computer terminal 20. The computer terminal 20 may be any computer, such as a personal computer, a smartphone, or a tablet terminal.

### (Operations of Tire Internal Pressure Measuring Apparatus)

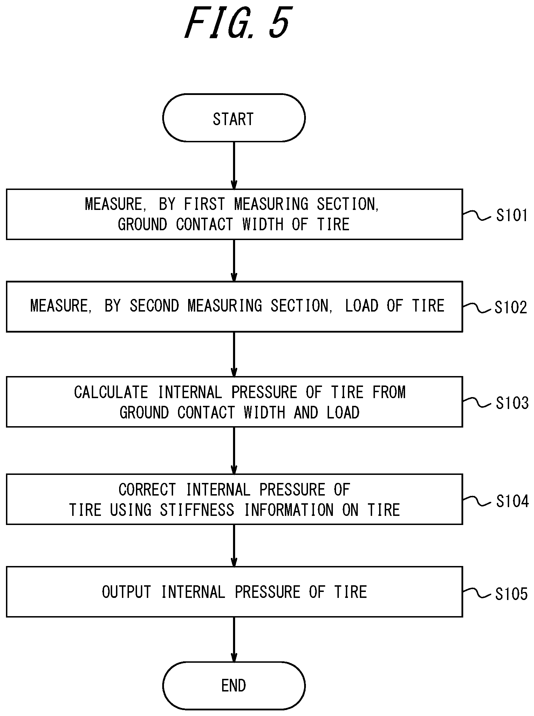

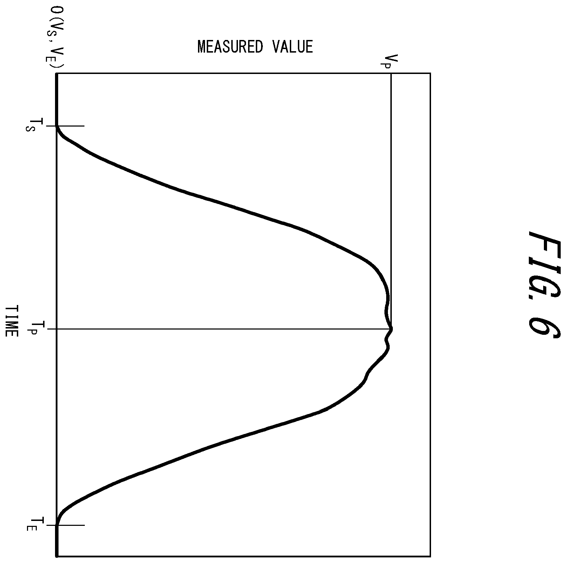

Operations of the tire internal pressure measuring apparatus 1 will be described with reference to FIGS. 5 and 6. FIG. 5 is a flowchart illustrating the operations of the tire internal pressure measuring apparatus 1. FIG. 6 is a diagram illustrating variation of an output value of the second measuring section 12. This description of the operations corresponds to a tire internal pressure measuring method executed by a computer, which is the computer terminal 20 of the tire internal pressure measuring apparatus 1.

In this description of the operations, it is assumed, as illustrated in FIG. 1, that the tire internal pressure measuring apparatus 1 is installed in the installation position in such a manner as to expose the surface 10S, and that the vehicle 2 equipped with the tires 3 passes over the tire internal pressure measuring apparatus 1 in the tire passing direction (apparatus vertical direction). The vehicle 2 passes over the tire internal pressure measuring apparatus 1 at a low speed of about 3 to 8 km/hour, for example, but not limited to this.

In this operation example, the operations in which the tire internal pressure measuring apparatus 1 calculates the internal pressure of one of the tires 3 will be described. However, as described above, in a case in which the tire internal pressure measuring apparatus 1 is configured to be able to measure both of ground contact widths and loads of multiple tires 3 (for example, tires 3 on both right and left wheels of the vehicle 2) at the same time, the internal pressure of the respective tires 3 can be calculated in parallel by these operations from the ground contact width and the load of each tire 3. For example, as illustrated in FIG. 2, in a case in which the tire internal pressure measuring apparatus 1 includes two sets of the first measuring section 11, the second measuring section 12, and the reading section 13, the tire internal pressure measuring apparatus 1 can calculate the internal pressure of two of the tires 3 in parallel.

With reference to FIG. 5, in step S101, the controller 18 of the tire internal pressure measuring apparatus 1 measures, by the first measuring section 11, a tire width directional ground contact width of a tire 3 in a state of being located on the first measuring section 11.

Any method can be employed to measure the ground contact width of the tire 3. For example, the controller 18 of the tire internal pressure measuring apparatus 1 measures, by the first measuring section 11, the maximum length of a portion at which the tire 3 contacts the measurement surface 11S of the first measuring section 11, in the apparatus width direction, as the tire width directional ground contact width of the tire 3. The controller 18 may store the measured ground contact width of the tire 3 in the memory 17.

The first measuring section 11 may be configured to repeatedly measure the ground contact width of the tire 3 at predetermined timings while the tire 3 passes over the first measuring section 11. For example, the first measuring section 11 may repeatedly measure the ground contact width of the tire 3 at 10 msec intervals. This enables the first measuring section 11 to acquire sufficient samples during low speed driving of the vehicle 2 while the processing volume of the tire internal pressure measuring apparatus 1 is reduced. However, the first measuring section 11 may be configured to measure the ground contact width of the tire 3 only once while the tire 3 passes over the first measuring section 11 or in a state in which the tire 3 is stopped on the first measuring section 11.

In step S102, the controller 18 of the tire internal pressure measuring apparatus 1 measures, by the second measuring section 12, a load applied from the tire 3 in a state of being located on the second measuring section 12.

Any method can be employed to measure the load of the tire 3. For example, the controller 18 of the tire internal pressure measuring apparatus 1 measures the load applied from the tire 3 that is located on the measurement surface 12S of the second measuring section 12. More specifically, as illustrated in FIG. 4 as the tire position 3P, the second measuring section 12 measures the load of the tire 3 with the measurement surface 12S of the second measuring section 12 completely covered in the tire passing direction by the ground contact surface of the tire 3. The controller 18 may store the measured load of the tire 3 in the memory 17.

In step S102, the second measuring section 12 may be configured to repeatedly measure the load of the tire 3 at predetermined timings while the tire 3 passes over the second measuring section 12. For example, the second measuring section 12 may repeatedly measure the load of the tire 3 at 10 msec intervals, just as with the first measuring section 11.

As a concrete example, as illustrated in FIG. 4, the tire 3 is assumed to pass over the measurement surface 12S of the second measuring section 12 in the order of tire positions 3S, 3P, and 3E. At this time, a measured value of the second measuring section 12 illustrates variation as in FIG. 6, where T_{S} is a point in time at which the tire 3 starts to contact the measurement surface 12S of the second measuring section 12 at the tire position 3S, and T_{E} is a point in time at which the tire 3 ends to contact the measurement surface 12S at the tire position 3E. In FIG. 6, the measured value of the second measuring section 12 peaks at a maximum value V_{P} at a point in time T_{P}. In this embodiment, the second measuring section 12 measures the maximum value V_{P}, as the load of the tire 3, among values of the load of the tire 3 that are repeatedly measured while the tire 3 passes over the second measuring section 12. The second measuring section 12 can thereby properly measure the load of the tire 3 when the tire 3 passes over the second measuring section 12. However, the second measuring section 12 may be configured to measure the load of the tire 3 only once while the tire 3 passes over the second measuring section 12 or in a state in which the tire 3 is stopped on the second measuring section 12.

With reference again to FIG. 5, in step S103, the controller 18 of the tire internal pressure measuring apparatus 1 calculates the internal pressure of the tire 3 from the ground contact width and the load of the tire 3.

Any method can be employed to calculate the internal pressure of the tire 3. For example, the controller 18 of the tire internal pressure measuring apparatus 1 calculates the contact area of the tire 3 to the second measuring section 12 by multiplying the ground contact width of the tire 3 measured by the first measuring section 11 and the length of the second measuring section 12 (measurement surface 12S) in the tire passing direction. The controller 18 then calculates the internal pressure of the tire 3 by dividing the load from the tire 3 measured by the second measuring section 12 by the contact area of the tire 3 to the second measuring section 12. The controller 18 may store the calculated internal pressure of the tire 3 in the memory 17.

In step S104, the controller 18 of the tire internal pressure measuring apparatus 1 corrects the internal pressure of the tire 3 using the stiffness information on the tire 3.

Any method can be employed to correct the internal pressure of the tire 3. Generally, tires 3 mounted on a vehicle 2 support the weight of the vehicle 2 by rubber, carcasses, or the like that makes/make up the tires 3, in addition to air or the like filled in the tires 3. Therefore, considering the stiffness of the tires 3 can further improve accuracy in calculating the internal pressure of the tires 3. For example, the controller 18 of the tire internal pressure measuring apparatus 1 may store, in the memory 17 in advance, a correction value and a correction algorithm associated with the stiffness information of the tire 3. The controller 18 corrects the internal pressure of the tire 3 calculated in step S103 using the correction value and the correction algorithm. The controller 18 may store the corrected internal pressure of the tire 3 in the memory 17.

The processing contents of the correction for the internal pressure of the tire 3 in step S104 may be uniform for all the tires 3, or may differ depending on each tire 3. The uniform correction for all the tires 3 can prevent an increase in processing volume for the correction by the controller 18 of the tire internal pressure measuring apparatus 1. On the other hand, the amount of correction for the internal pressure of the tire 3 may vary depending on the stiffness information on the tire 3. Therefore, taking into account the stiffness of each tire 3 can further improve accuracy in calculating the internal pressure of the tire 3. For example, the controller 18 may correct the internal pressure of the tire 3 calculated in step S103 using a correction value and a correction algorithm that vary depending on the stiffness information on the tire 3.

In step S104, the controller 18 of the tire internal pressure measuring apparatus 1 may acquire the stiffness information on the tire 3 by any method. For example, the controller 18 may read, by the reading section 13, the stiffness information on the tire 3 from the electronic tag installed in the tire 3. For example, the controller 18 may read, by the reading section 13, the serial number of the tire 3 from the electronic tag installed in the tire 3, as the stiffness information on the tire 3. The controller 18 can thereby correct the internal pressure of the tire 3 using a correction value and a correction algorithm that are stored in the memory 17 in association with the read serial number of the tire 3. With such a configuration, the tire internal pressure measuring apparatus 1 can realize, by a simple method, the correction of the internal pressure of the tire 3 that varies depending on the stiffness information on the tire 3. However, the controller 18 may accept an operation to input the stiffness information on the tire 3 via the input interface 16, or may receive the stiffness information on the tire 3 from another computer via the communication interface 14.

In step S105, the controller 18 of the tire internal pressure measuring apparatus 1 outputs the internal pressure of the tire 3.

Any method can be employed to output the internal pressure of the tire 3. For example, the controller 18 of the tire internal pressure measuring apparatus 1 may control the output interface 15, such as a display, to output the internal pressure of the tire 3. Alternatively, the controller 18 may transmit, via the communication interface 14, a request to display the internal pressure of the tire 3 to another computer. The other computer is, for example, a computer such as a smartphone owned by an owner of the vehicle 2. As a result, the user of the tire internal pressure measuring apparatus 1, such as the owner of the vehicle 2, can easily grasp the internal pressure of the tire 3.

As described above, in this embodiment, the tire internal pressure measuring apparatus 1 includes the first measuring section 11 and the second measuring section 12. The first measuring section 11 measures a tire width directional ground contact width of a tire 3 in a state of being located on the first measuring section 11. The second measuring section 12 measures a load applied from the tire 3 in a state of being located on the second measuring section 12. The tire internal pressure measuring apparatus 1 then calculates the internal pressure of the tire 3 from the measured ground contact width and the measured load.

According to such a configuration, the tire internal pressure measuring apparatus 1 can accurately measure the internal pressure of a tire 3 from outside the tire 3, without attaching an air gauge or an air pressure sensor to the tire 3. Therefore, according to this embodiment, it is possible to improve accuracy in measuring the internal pressure of a tire 3 from outside the tire 3.

### EXAMPLES

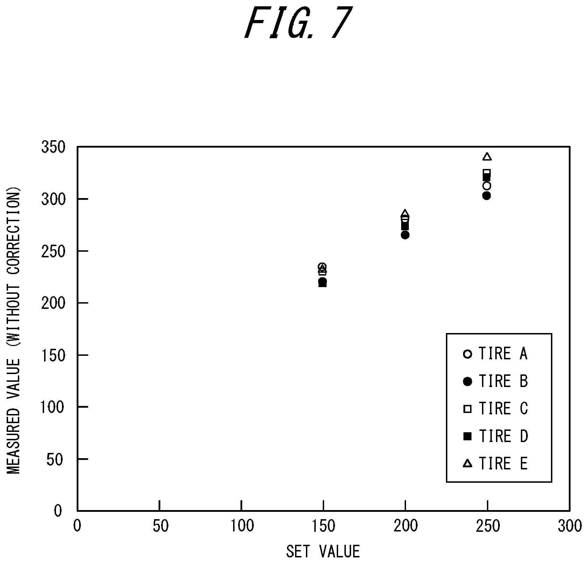

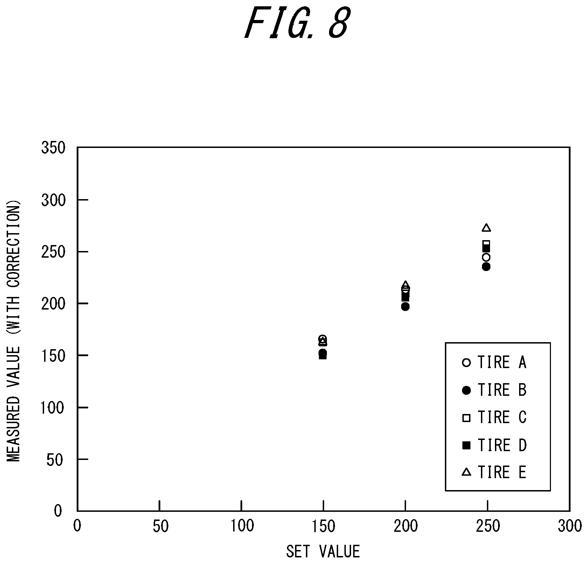

Examples of a tire internal pressure measuring apparatus 1 according to an embodiment of the present disclosure will be described with reference to Tables 1 and 2 and FIGS. 7 and 8. Table 1 and FIG. 7 illustrate measured values (without correction) of the internal pressure of tires by the tire internal pressure measuring apparatus 1. Table 2 and FIG. 8 illustrate measured values (with correction) of the internal pressure of the tires by the tire internal pressure measuring apparatus 1.

As Examples, five different types of tires A to E were mounted on vehicles, and the vehicles were allowed to pass over the tire internal pressure measuring apparatus 1 at a speed of about 3 to 8 km/hour. The internal pressure of the tires A to E was measured by the tire internal pressure measuring apparatus 1. During this time, the second measuring section 12 repeatedly measured a load of each tire at 10 msec intervals, and a maximum value of the measured load was set as a load applied from the tire to the second measuring section 12. The measurements were performed for the tires A to E in each of cases in which internal pressure was 150 kPa, 200 kPa, and 250 kPa. As a correction for the internal pressure of the tires, a uniform correction was made to lower the measured values by 70 kPa, taking into account stiffness information on the tires A to E.

As a result, as illustrated in FIG. 7, when no correction is made, the slope of the measured value to the set value of the internal pressure is approximately equal regardless of tire. Therefore, it was found that the tire internal pressure measuring apparatus 1 can calculate the internal pressure of the tires with high accuracy, regardless of tire type and internal pressure.

Furthermore, as illustrated in FIG. 8, it can be seen that with correction, the tire internal pressure can be measured with an accuracy of ±20 kPa relative to the set value. Therefore, it was found that the tire internal pressure measuring apparatus 1 can calculate the internal pressure of the tires with even higher accuracy, regardless of tire type and internal pressure, by correcting the internal pressure taking into account the stiffness information on the tires.

**[Table 1]**

| Measured values (without correction) of internal pressure of tires by tire internal pressure measuring apparatus 1 | | | | | | |
|---|---|---|---|---|---|---|
| Tire | | A | B | C | D | E |
| Tire width (mm) | | 155 | 185 | 195 | 205 | 245 |

| | | Measured value | | | | |
|---|---|---|---|---|---|---|
| Set value (kPa) | 150 | 234 | 220 | 231 | 219 | 232 |
| | 200 | 281 | 265 | 277 | 274 | 285 |
| | 250 | 312 | 303 | 324 | 321 | 340 |

**[Table 2]**

| Measured values (with correction) of internal pressure of tires by tire internal pressure measuring apparatus 1 | | | | | | |
|---|---|---|---|---|---|---|
| Tire | | A | B | C | D | E |
| Tire width (mm) | | 155 | 185 | 195 | 205 | 245 |

| | | Measured value | | | | |
|---|---|---|---|---|---|---|
| Set value (kPa) | 150 | 164 | 150 | 161 | 149 | 162 |
| | 200 | 211 | 195 | 207 | 204 | 215 |
| | 250 | 242 | 233 | 254 | 251 | 270 |

Although the present invention has been described based on the drawings and embodiments, it should be noted that one skilled in the art can make various variations and modifications without departing from the scope of the invention as being defined by the appended claims.

For example, in the embodiment described above, the main body 10 of the tire internal pressure measuring apparatus 1 is described as having the first measuring sections 11, the second measuring sections 12, and the reading sections 13, and the computer terminal 20 is described as having the communication interface 14, the output interface 15, the input interface 16, the memory 17, and the controller 18, but not limited to these. For example, the main body 10 may have some or all of the functions provided in the computer terminal 20. Alternatively, the computer terminal 20 may have some or all of the functions provided in the main body 10.

For example, in the embodiment described above, the first measuring sections 11, the second measuring sections 12, and the reading sections 13 are described as being arranged in the main body 10 of the tire internal pressure measuring apparatus 1, but not limited to this. For example, the tire internal pressure measuring apparatus 1 may not have the main body 10, and each of the first measuring sections 11, the second measuring sections 12, and the reading sections 13 may be installed directly on the ground, a road surface, or the like.

For example, in the embodiment described above, the first measuring sections 11 are arranged upstream from the second measuring sections 12 in the tire passing direction in the main body 10 of the tire internal pressure measuring apparatus 1, but not limited to this. In the main body 10 of the tire internal pressure measuring apparatus 1, the second measuring sections 12 may be arranged upstream from the first measuring sections 11 in the tire passing direction.

For example, an embodiment in which a general purpose computer functions as the controller 18 or the computer terminal 20 of the tire internal pressure measuring apparatus 1 according to the above embodiment is also possible. Specifically, a program describing processing contents to realize each function of the tire internal pressure measuring apparatus 1 according to the above embodiment is stored in a memory of the general purpose computer, and the program is read and executed by its processor. Thus, the present disclosure can also be realized as a program that can be executed by a processor, or a non-transitory computer readable medium storing the program. The non-transitory computer readable medium includes, for example, a magnetic recording device, an optical disk, an optical magnetic recording medium, a semiconductor memory, or the like.

### INDUSTRIAL APPLICABILITY

The present disclosure can provide the tire internal pressure measuring apparatus and the tire internal pressure measuring method that improve accuracy in measuring the internal pressure of a tire from outside the tire.

### [Contribution to the Sustainable Development Goals (SDGs) initiated by the United Nations]

The SDGs have been proposed to realize a sustainable society. An embodiment of the present disclosure could be technology that contributes to "No. 9: Build resilient infrastructure, promote inclusive and sustainable industrialization and foster innovation" and the like.

## Claims

1. A tire internal pressure measuring apparatus (1) comprising:
a first measuring section (11) configured to measure a tire width directional ground contact width of a tire (3) in a state of being located on the first measuring section (11);
a second measuring section (12) configured to measure a load applied from the tire (3) in a state of being located on the second measuring section (12); and
a controller (18) configured to calculate an internal pressure of the tire (3) from the tire width directional ground contact width and the load,
wherein the controller (18) is further configured to correct the internal pressure using stiffness information on the tire (3).

2. The tire internal pressure measuring apparatus (1) according to claim 1, wherein
the second measuring section (12) is configured such that the tire (3) can pass over the second measuring section (12), and
a length of the second measuring section (12) in a tire passing direction is 20 mm to 100 mm.

3. The tire internal pressure measuring apparatus (1) according to claim 2, wherein the second measuring section (12) is configured to repeatedly measure the load while the tire (3) passes over the second measuring section (12).

4. The tire internal pressure measuring apparatus (1) according to claim 1, wherein an amount of correction of the internal pressure varies depending on the stiffness information.

5. The tire internal pressure measuring apparatus (1) according to claim 4, comprising a reading section (13) configured to read the stiffness information from an electronic tag installed in the tire (3).

6. The tire internal pressure measuring apparatus (1) according to any one of claims 1 to 3, further comprising a main body (10) in which the second measuring section (12) is disposed,
wherein the second measuring section (12) is disposed in the main body (10) in such a manner that a measurement surface (12S) of the second measuring section (12) and a surface (10S) of the main body (10) are flat.

7. The tire internal pressure measuring apparatus (1) according to any one of claims 1 to 3, further comprising an output interface (15) configured to output the internal pressure of the tire (3).

8. A tire internal pressure measuring method performed by a tire internal pressure measuring apparatus (1) comprising: a first measuring section (11); a second measuring section (12); and a controller (18), the tire internal pressure measuring method comprising:
measuring, by the first measuring section (11), a tire width directional ground contact width of a tire (3) in a state of being located on the first measuring section (11);
measuring, by the second measuring section (12), a load applied from the tire (3) in a state of being located on the second measuring section (12);
calculating, by the controller (18), an internal pressure of the tire (3) from the tire width directional ground contact width and the load; and
correcting, by the controller (18), the internal pressure using stiffness information on the tire (3).

## Patentansprüche

1. Reifeninnendruck-Messeinrichtung (1), umfassend:
einen ersten Messabschnitt (11), der dafür konfiguriert ist, die Aufstandsbreite in Reifenbreitenrichtung eines Reifens (3) in einem Zustand zu messen, in dem sich der Reifen auf dem ersten Messabschnitt (11) befindet;
einen zweiten Messabschnitt (12), der dafür konfiguriert ist, eine durch den Reifen (3) ausgeübte Belastung in einem Zustand zu messen, in dem sich der Reifen auf dem zweiten Messabschnitt (12) befindet; und
eine Steuereinheit (18), die dafür konfiguriert ist, einen Innendruck des Reifens (3) anhand der Aufstandsbreite in Reifenbreitenrichtung und der Belastung zu berechnen,
wobei die Steuereinheit (18) ferner dafür konfiguriert ist, den Innendruck unter Verwendung von Steifigkeitsinformationen über den Reifen (3) zu korrigieren.

2. Reifeninnendruck-Messeinrichtung (1) nach Anspruch 1, wobei:
der zweite Messabschnitt (12) so konfiguriert ist, dass der Reifen (3) den zweiten Messabschnitt (12) überfahren kann, und
eine Länge des zweiten Messabschnitts (12) in einer Reifenfahrtrichtung 20 mm bis 100 mm beträgt.

3. Reifeninnendruck-Messeinrichtung (1) nach Anspruch 2, wobei der zweite Messabschnitt (12) dafür konfiguriert ist, die Belastung wiederholt zu messen, während der Reifen (3) den zweiten Messabschnitt (12) überfährt.

4. Reifeninnendruck-Messeinrichtung (1) nach Anspruch 1, wobei ein Korrekturbetrag des Innendrucks in Abhängigkeit von den Steifigkeitsinformationen variiert.

5. Reifeninnendruck-Messeinrichtung (1) nach Anspruch 4, umfassend einen Leseabschnitt (13), der dafür konfiguriert ist, die Steifigkeitsinformationen aus einer im Reifen (3) installierten elektronischen Markierung zu lesen.

6. Reifeninnendruck-Messeinrichtung (1) nach einem der Ansprüche 1 bis 3, ferner umfassend einen Hauptkörper (10), in dem der zweite Messabschnitt (12) angeordnet ist,
wobei der zweite Messabschnitt (12) auf solche Weise im Hauptkörper (10) angeordnet ist, dass eine Messungsoberfläche (12S) des zweiten Messabschnitts (12) und eine Oberfläche (10S) des Hauptkörpers (10) flach sind.

7. Reifeninnendruck-Messeinrichtung (1) nach einem der Ansprüche 1 bis 3, weiter umfassend eine Ausgabeschnittstelle (15), die dafür konfiguriert ist, den Innendruck des Reifens (3) auszugeben.

8. Reifeninnendruck-Messverfahren, durchgeführt durch eine Reifeninnendruck-Messeinrichtung (1), die Folgendes umfasst: einen ersten Messabschnitt (11); einen zweiten Messabschnitt (12); und eine Steuereinheit (18), wobei das Reifeninnendruck-Messverfahren umfasst:
Messen einer Aufstandsbreite in Reifenbreitenrichtung eines Reifens (3) durch den ersten Messabschnitt (11) in einem Zustand, in dem sich der Reifen auf dem ersten Messabschnitt (11) befindet;
Messen einer durch den Reifen (3) ausgeübten Belastung durch den zweiten Messabschnitt (12) in einem Zustand, in dem sich der Reifen auf dem zweiten Messabschnitt (12) befindet;
Berechnen eines Innendrucks des Reifens (3) durch die Steuereinheit (18) anhand der Aufstandsbreite in Reifenbreitenrichtung und der Belastung; und
Korrigieren des Innendrucks durch die Steuereinheit (18) unter Verwendung von Steifigkeitsinformationen über den Reifen (3).

## Revendications

1. Appareil de mesure de pression interne de pneumatique (1) comprenant :
une première section de mesure (11) configurée pour mesurer une largeur de contact au sol dans la direction de largeur de pneumatique d'un pneumatique (3) dans un état étant situé sur la première section de mesure (11) ;
une seconde section de mesure (12) configurée pour mesurer une charge appliquée par le pneumatique (3) dans un état étant situé sur la seconde section de mesure (12) ; et
un dispositif de commande (18) configuré pour calculer une pression interne du pneumatique (3) à partir de la largeur de contact au sol dans la direction de largeur de pneumatique et la charge,
dans lequel le dispositif de commande (18) est en outre configuré pour corriger la pression interne en utilisant les informations de rigidité sur le pneumatique (3).

2. Appareil de mesure de pression interne de pneumatique (1) selon la revendication 1, dans lequel
la seconde section de mesure (12) est configurée de telle sorte que le pneumatique (3) puisse passer au-dessus de la seconde section de mesure (12), et
une longueur de la seconde section de mesure (12) dans une direction de passage de pneumatique est de 20 mm à 100 mm.

3. Appareil de mesure de pression interne de pneumatique (1) selon la revendication 2, dans lequel la seconde section de mesure (12) est configurée pour mesurer de manière répétée la charge pendant que le pneumatique (3) passe au-dessus de la seconde section de mesure (12).

4. Appareil de mesure de pression interne de pneumatique (1) selon la revendication 1, dans lequel une quantité de correction de la pression interne varie en fonction des informations de rigidité.

5. Appareil de mesure de pression interne de pneumatique (1) selon la revendication 4, comprenant une section de lecture (13) configurée pour lire les informations de rigidité à partir d'une étiquette électronique installée dans le pneumatique (3).

6. Appareil de mesure de pression interne de pneumatique (1) selon l'une quelconque des revendications 1 à 3, comprenant en outre un corps principal (10) dans lequel est disposée la seconde section de mesure (12),
dans lequel la seconde section de mesure (12) est disposée dans le corps principal (10) de telle sorte qu'une surface de mesure (12S) de la seconde section de mesure (12) et une surface (10S) du corps principal (10) soient plates.

7. Appareil de mesure de pression interne de pneumatique (1) selon l'une quelconque des revendications 1 à 3, comprenant en outre une interface de sortie (15) configurée pour délivrer en sortie la pression interne du pneumatique (3).

8. Procédé de mesure de pression interne de pneumatique mis en œuvre par un appareil de mesure de pression interne de pneumatique (1) comprenant : une première section de mesure (11) ; une seconde section de mesure (12) ; et un dispositif de commande (18), le procédé de mesure de pression interne de pneumatique comprenant :
la mesure, par l'intermédiaire de la première section de mesure (11), d'une largeur de contact au sol dans la direction de largeur de pneumatique d'un pneumatique (3) dans état étant situé sur la première section de mesure (11) ;
la mesure, par l'intermédiaire de la seconde section de mesure (12), d'une charge appliquée par le pneumatique (3) dans un état étant situé sur la seconde section de mesure (12) ;
le calcul, par l'intermédiaire du dispositif de commande (18), d'une pression interne du pneumatique (3) à partir de la largeur de contact au sol dans la direction de largeur de pneumatique et de la charge ; et
la correction, par l'intermédiaire du dispositif de commande (18), de la pression interne en utilisant les informations de rigidité sur le pneumatique (3).
